# EUROPEAN PATENT APPLICATION

(11) **EP 1 168 555 A1**
(43) Date of publication of application: **02.01.2002**
(21) Application number: 01830294.3
(22) Date of filing: 07.05.2001
(51) Int. Cl.: H02G 3/04

(54) **Crosspiece for channel-shape structures**

(30) Priority: 30.06.2000 IT FI000148
(71) Applicant: K 2000 S.R.L., 50015 Bagno a Ripoli (Firenze) (IT)
(72) Inventor: Tassi, Fernando, 50012 Bagno a Ripoli (Firenze) (IT)
(74) Representative: Martini, Lazzaro

(57) **Abstract**

Fixing element or crosspiece for the engagement of cables, tubes and the like inside a channel-shape structure (3) comprising one or more channels (5) each of which is longitudinally delimited by two walls (4;41) having corresponding free edges (40) to be used for the engagement of said element to the structure, characterized in that it is provided with cam means disposed in such a way as to interact with said walls in order to provide a stable but removable association of the element with the channel-shape structure upon a rotation of the element relative to the structure.

## Description

The present invention relates to a crosspiece for channel-shape structures.

Fixing elements are known, also called "crosspieces" to be used for the engagement of cables, tubing and similar components of electrical, communication, hydraulic and like systems or equipment, inside a channel-shape structure. The said fixing elements or crosspieces consist of a body of plastic material which is associated to the channel by elastically deforming the latter. A drawback of the crosspieces of known type is the relative complexity of the fixing process. In fact, the fixing operations - which may appear simple when the channel-shape structure is wall-mounted or fixed at an easily accessible location - will result difficult to be carried out under conditions of unstable equilibrium or at positions uneasy to reach.

The main object of the present invention is to overcome the said drawback.
This result has been achieved, according to the invention, by providing a crosspiece having the features indicated in the characterizing part of claim 1. Further characteristics being set forth in the dependent claims.

The advantages deriving from the present invention lie essentially in the fact that it is possible to associate the fixing element with channel-shape structure, and remove it quite easily also when the installer is to operate under conditions of unstable equilibrium and on structures whose locations are difficult to access; that the element in question is relatively simple to make, cost-effective and reliable.

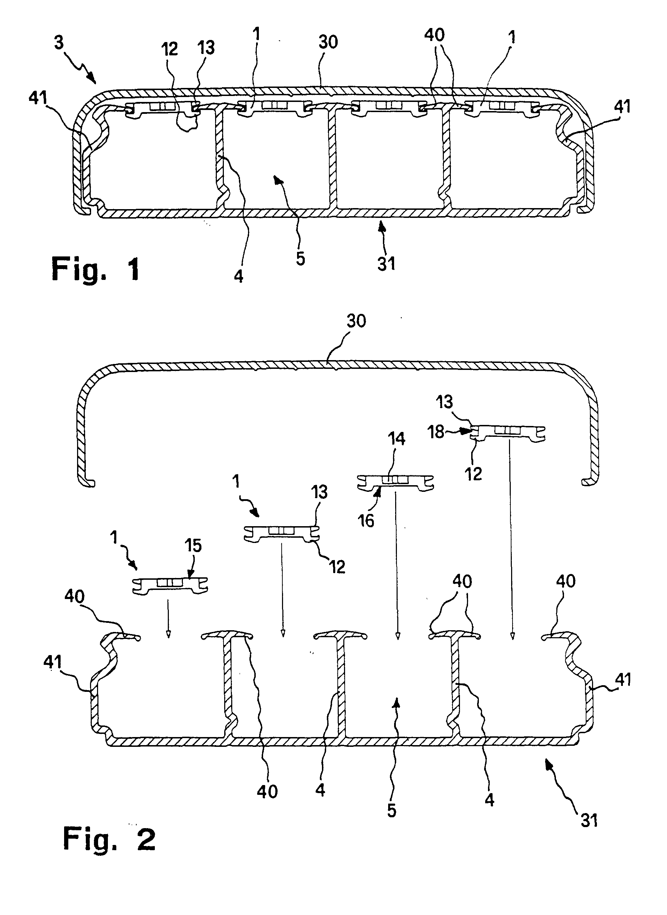

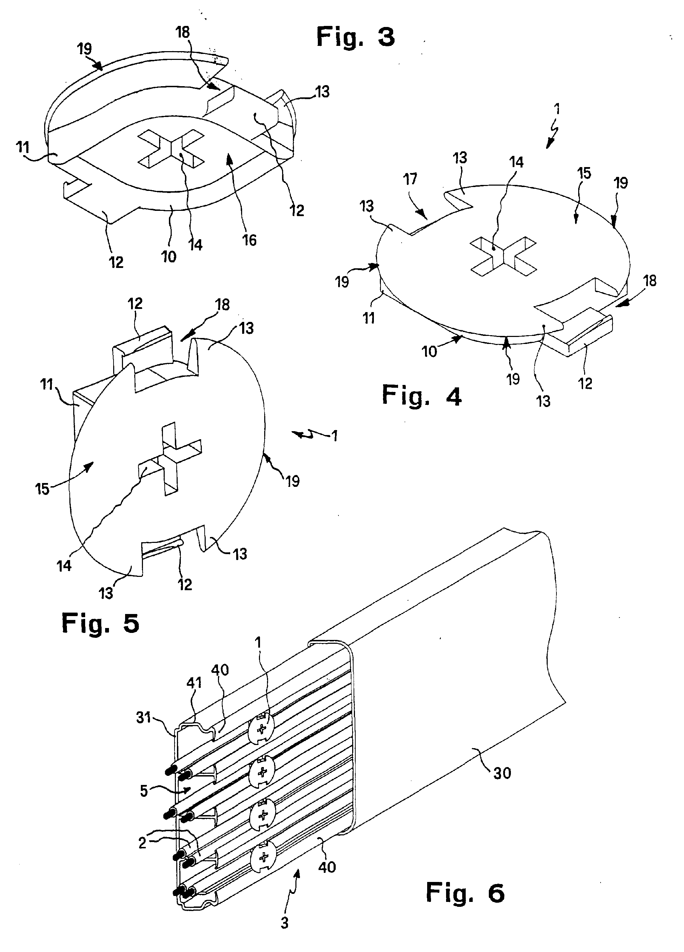

The following description relates to a not limiting embodiment of the present invention, reference being made to the attached drawings, wherein: Figs. 1 and 2 are cross-section views showing the channel-shape structures with crosspieces, according to the present invention, when in use and in exploded view, respectively; Figs. 3, 4 and 5 show one embodiment of the present invention in three different perspective views; Fig. 6 is a perspective view of a portion of channel-shape structure like the one in Fig. 1.

As above mentioned, the fixing element or crosspiece (1) in question can be used for retaining cables, tubes and the like, inside a channel-shape structure (3). This comprises a base element (31) and a cover (30) to be snap-fitted on the base element (31) with light forcible engagement. The base element (31) in the example has rectangular cross-section and exhibits a plurality of septa (4) disposed parallel to the side walls (41) so as to define corresponding channels (5) for receiving cables (2) or conduits, or other. The side walls (41), as well as the septa (4), have upper longitudinal edges (40) facing the inner channels (5) and usable for fixing the crosspieces (1).

According to the present invention, the crosspieces (1) are provided with cam means able to ensure the fixing thereof to the channel-shape structure (3). As best illustrated in Figs. 3-5, the crosspieces may consist of a body which, for example, can be moulded from plastic material to take up a substantially planar development. The upper portion of the crosspieces (1) is essentially circular, with two recesses (17) delimited by corner portions (13). The crosspiece's upper portion has an outer perimeter which extends almost entirely over two wide arcs of circumference (19) which are separated by the said recessed parts (17). The above said cam means may consist of one lower portion (10) of the body of the crosspiece (1) having two wings (12) diametrically opposed and spaced apart of an extent substantially equal to the height of the channels (5).

In particular, the two wings (12) are disposed in correspondence of the two recessed portions (17). Each of said wings (12) will therefore result opposite to a corresponding pair of corner portions (13), thereby forming a seat (18) which is delimited below by the two wings, and on top by the corner portions (13). In the embodiment illustrated in the drawings, the contour of the lower cam portion (10) is shaped as a close curve with two diametrically opposed lobes (11) laterally located with respect to said wings (12). Provided on the upper face (15) of the crosspiece (1) is a seat (14) for a tool allowing same element to be driven into rotation, as described below. The seat (14) may extend through the crosspiece up to the lower face (16) thereof.

When fixing it to the channel-shape structure (3), the crosspiece (1) is placed in correspondence of a selected channel (5), with the wings (12) disposed along the direction of longitudinal development of the channel, that is, in a way that they will not interfere with the edges (40) of the septa (4) nor with walls (41). In this configuration, the upper portion of the crosspiece (with its parts having a substantially circular development (19)) abuts on said edges (40), while the lower portion (10) faces the same edges with its curved profile. In order to fix the crosspiece (1), it is sufficient to rotate the latter through 90°, thereby making it reach the end of stroke as determined by the lobes (11) whose vertexes intercept the septa (4) (or the walls (41) of base (31)). In this way, the two seats (18) will result in correspondence of the edges (40), with the wings (12) lying below the edges (40) and the corner portions above the same edges. The removal of the element (1) only requires a 90° rotation thereof in a direction opposite to that for fixing it.

## Claims

1. Fixing element or crosspiece for the engagement of cables, tubes and the like inside a channel-shape structure (3) comprising one or more channels (5) each of which is longitudinally delimited by two walls (4;41) having corresponding free edges (40) to be used for the engagement of said element to the structure, **characterized in that** it is provided with cam means disposed in such a way as to interact with said walls in order to provide a stable but removable association of the element with the channel-shape structure upon a rotation of the element relative to the structure.

2. Fixing element according to claim 1, **characterized in that** the said cam means consist of one portion (10) of the body of the crosspiece (1) having two wings (12) diametrically opposed and spaced apart of an extent substantially equal to the height of the channel (5) to be equipped.

3. Fixing element according to claim 1, **characterized by** having an outer perimeter on top which extends almost entirely over two wide arcs of circumference (19) being separated by two diametrically recessed parts (17) which are provided with two wings (12) disposed below in correspondence of said recessed parts (17) so as to define, in conjunction with relevant portions (13) of said perimeter (19), a seat (18) having dimensions corresponding to those of said edges (40).

4. Fixing element according to claim 1, **characterized in that** it is provided with a lower portion (10) whose curved profile has two interruptions of continuity which are located in correspondence of two lobes (11) diametrically spaced apart.

5. Fixing element according to claim 1, **characterized in that** it is provided with a seat (14) for a tool allowing the same element to be driven into rotation relative to the channel-shape structure so as to allow the association thereof.
